# EUROPEAN PATENT SPECIFICATION

(11) **EP 2 773 227 B1**
(45) Date of publication and mention of the grant of the patent: **21.12.2016**
(21) Application number: 12786905.5
(22) Date of filing: 02.11.2012
(51) Int. Cl.: A23L 3/365, F25D 23/12

(54) **A REFRIGERATOR HAVING FROZEN FOOD THAWING FUNCTION**
KÜHLSCHRANK AUFTAUFUNKTION FÜR TIEFKÜHLGUT
RÉFRIGÉRATEUR À FONCTION DE DÉGEL DE DENRÉES CONGELÉES

(30) Priority: 04.11.2011 TR 201111057
(43) Date of publication of application: 10.09.2014
(73) Proprietor: Arçelik Anonim Sirketi, 34950 Istanbul (TR)
(72) Inventor: CELIK, Aydin, 34950 Istanbul (TR); HOCAOGLU, Sabahattin, 34950 Istanbul (TR); SOYSAL, Feyzi Alper, 34950 Istanbul (TR)
(86) International application number: PCT/EP2012/071761
(87) International publication number: WO 2013/064664

(56) References cited:
- JP-A- 2001 299 307
- JP-B- 7 055 319
- US-A- 4 812 622
- US-A1- 2004 139 863
- US-A1- 2011 088 415
- US-A1- 2012 266 617

## Description

The present invention relates to a refrigerator having the function of thawing frozen foods.

In refrigerators having freezing and cooling compartments, when some of the foodstuffs stored in the freezing compartment are desired to be consumed, first of all the food has to be taken out of the freezing compartment to be thawed and thereafter prepared for consumption. In order to perform the thawing process, the fresh food compartment, with a higher temperature than the freezing compartment, is provided with special cabinets disposed therein, equipped with special heating mechanisms and whereat only the thawing process is performed. In the state of the art, the thawing process in the special cabinet is ended by the user by means of a termination button.

In the state of the art Japanese Patent Document No. JP7055319, a refrigerator is described comprising a thawing chamber having a start pushbutton switch which starts or ends the thawing process.

The aim of the present invention is the realization of a refrigerator having a thawing compartment wherein the thawing process is ended automatically.

The refrigerator realized in order to attain the aim of the present invention, explicated in the first claim and the respective claims thereof, comprises a thawing compartment wherein the frozen objects are placed, at least one heater providing the interior of the thawing compartment to be heated for thawing the frozen objects, at least one sensor that detects the temperature inside the thawing compartment and a control unit that determines the operation time required to elapse in order to reach the upper limit temperature value recorded in its memory, predetermined by the producer and regulates the operation of the heater by applying consecutive operation times and stopping times.

The refrigerator of the present invention furthermore comprises the control unit that compares two consecutive operation times and continues the thawing process according to the result of the comparison or ends the thawing process by stopping the heater completely.

In a first alternative of the present invention, the control unit calculates the ratio of the last detected operation time to the previous operation time, compares this ratio with a limit ratio recorded in its memory, predetermined by the producer and provides the thawing process to be ended if the last detected ratio is smaller than the limit ratio. The thawing process is ended by stopping the heater and the fan.

In an embodiment of the first alternative, the refrigerator comprises the thawing compartment having at least one fan that provides the air therein to be propelled and the control unit that stops the operation of the fan if the last detected ratio is smaller than the limit ratio. When the temperature of the thawing compartment reaches the upper limit temperature, the operation time is detected by the control unit after the heater is stopped. In the case the detected operation time is at most half of the previous operation time, the fan is also stopped and the thawing process is ended.

In an embodiment of the first alternative, the control unit ends the thawing process if the last detected ratio is less than 0.5.

In an embodiment of the first alternative, the control unit ends the thawing process if the last detected ratio is equal to 0.5.

In a second alternative of the present invention, the control unit compares the difference between the last detected operation time and the previous operation time, with a limit value recorded in its memory, predetermined by the producer and ends the thawing process if the last detected difference is smaller than the limit value.

In an embodiment of the present invention, the refrigerator comprises at least one button that provides the start or ending of the thawing process by being pressed on by the user.

In an embodiment of the present invention, the refrigerator comprises at least one alerter that informs the user when the thawing process is ended.

By means of the present invention, a refrigerator is realized, comprising a thawing compartment wherein the thawing process is ended according to the operation times without requiring any intervention by the user for ending the thawing process.

A refrigerator realized in order to attain the aim of the present invention is illustrated in the attached figures, where:
Figure 1 - is the perspective view of a refrigerator.
Figure 2 - is the perspective view of the refrigerator having a thawing compartment.

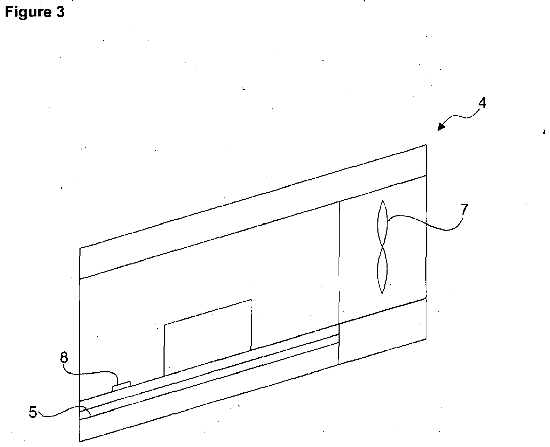

Figure 3 - is the sideways schematic view of a thawing compartment.
Figure 4 - is the temperature-time graphic realized in the thawing compartment during the thawing process.

The elements illustrated in the figures are numbered as follows:
- 1.: Refrigerator
- 2.: Fresh food compartment
- 3.: Freezing compartment
- 4.: Thawing compartment
- 5.: Heater
- 6.: Control unit
- 7.: Fan
- 8.: Sensor
- 9.: Alerter
- 10.: Button

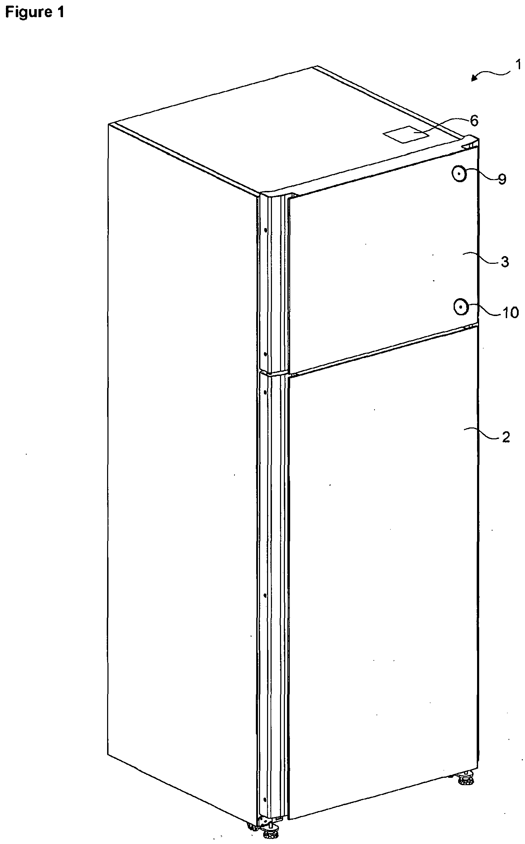

The refrigerator (1) comprises a fresh food compartment (2) wherein objects to be cooled are placed, a freezing compartment (3) wherein objects to be frozen are placed and a thawing compartment (4) disposed inside the fresh food compartment (2), wherein the frozen objects are placed, a heater (5) providing the interior of the thawing compartment (4) to be heated, a sensor (8) that detects the temperature inside the thawing compartment (4) and a control unit (6) that detects the operation time (tₕ) elapsing for reaching the upper limit temperature value (Tᵤₚₚₑᵣ) predetermined by the producer and recorded in its memory and that operates the heater (5) by applying consecutive operation times (tₕ) and stopping times (t_{off}) (Figure 1).

The refrigerator (1) of the present invention furthermore comprises the control unit (6) that compares the last detected operation time (tₕ) with the previous operation time (tₕ₋₁) and continues the thawing process or stops the thawing process according to the result of the comparison. The heater (5) continues to operate, providing the interior of the thawing compartment (4) to be heated until the interior temperature of thawing compartment (4) reaches the upper limit temperature value (Tᵤₚₚₑᵣ). When the interior temperature of the thawing compartment (4) reaches the upper limit temperature value (Tᵤₚₚₑᵣ), the heater (5) is stopped by the control unit (6). The operation time (tₕ) elapsed from the start of the heater (5) operation until the interior temperature of the thawing compartment (4) reaches the upper limit temperature value (Tᵤₚₚₑᵣ) is detected by the control unit (6). During the thawing process, the heater (5) is operated/stopped by means of the control unit (6). The thawing process is continued by operating the heater (5) according to the comparison result of two consecutive operation times (tₕ, tₕ₋₁) of the heater (5) or the thawing process is ended by stopping the operation of the heater (5). Thus, the thawing process is ended without requiring the intervention of the user.

In a first alternative of the present invention, the control unit (6) compares the ratio (R=tₕ/tₕ₋₁), of the last detected operation time (tₕ), to the previous operation time (tₕ₋₁) with a limit ratio (Rₗᵢₘᵢₜ) recorded in its memory, predetermined by the producer and ends the thawing process if the last determined ratio (R) is smaller than the limit ration (Rₗᵢₘᵢₜ) value. During the thawing process, the heater (5) is operated/stopped by means of the control unit (6). The ratio (R) of two consecutive operation times (tₕ/tₕ₋₁ of the heater (5) to one another is determined by the control unit (6). The thawing process is ended if the determined ratio (R) is smaller than the limit ration (Rₗᵢₘᵢₜ) value. Consequently, the heater (5) is stopped and the thawing process is ended by comparing the ratio of the operation times (tₕ/tₕ₋₁) to one another without requiring intervention of the user.

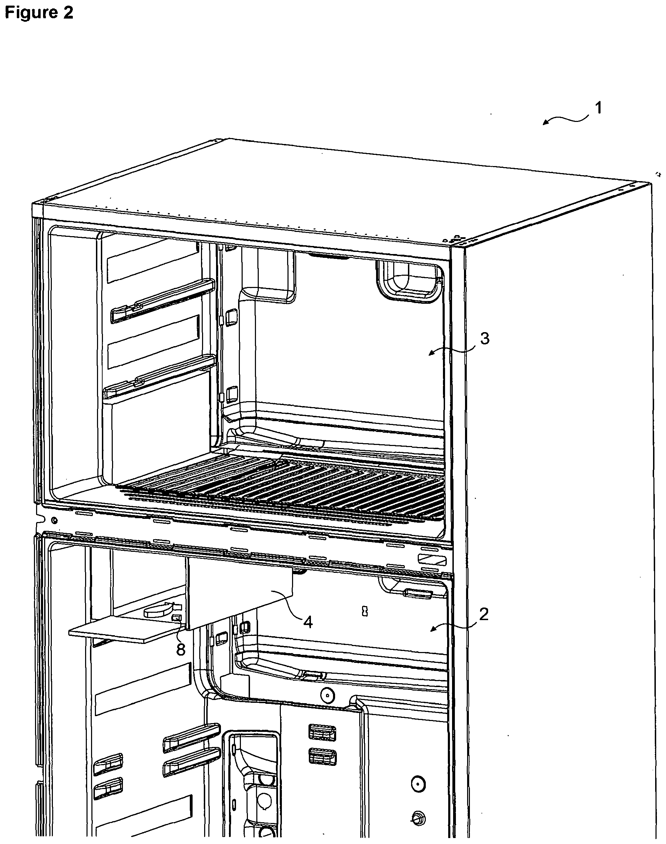

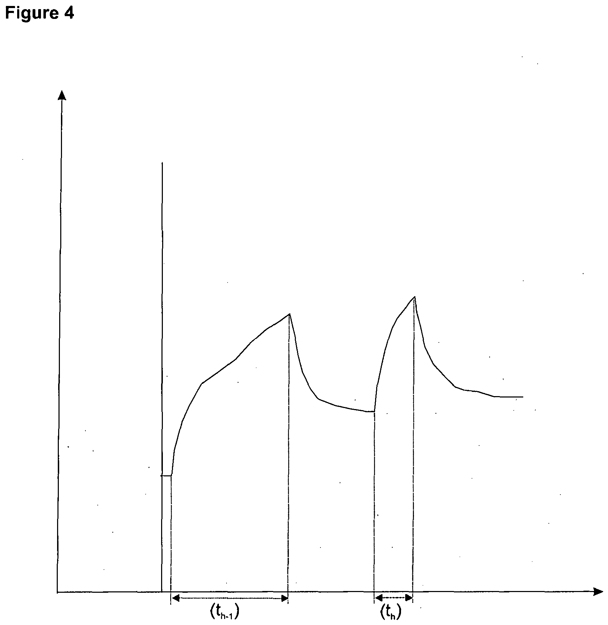

In an embodiment of the first alternative, the refrigerator (1) comprises the thawing compartment (4) having at least one fan (7) providing the air therein to be propelled and the control unit (6) providing the thawing process to be ended by stopping the heater (5) and the fan (7) together if the last detected ratio (R) is smaller than the limit ratio (Rₗᵢₘᵢₜ) value. During the thawing process, the air inside the thawing compartment (4) is propelled by the fan (7), providing the circulation of the hot air around the
frozen object. When the interior temperature of the thawing compartment (4) reaches the upper limit temperature (Tᵤₚₚₑᵣ), the heater (5) is stopped by the control unit (6). The ratio (R) of two consecutive operation times (tₕ, tₕ₋₁) of the heater (5) is detected by the control unit (6) and if the detected ratio (R) is smaller than the limit ratio (Rₗᵢₘᵢₜ) value, the fan (7) is stopped by the control unit (6) and the thawing process is ended (Figure 2, Figure 4).

In an embodiment of the first alternative, the control unit (6) ends the thawing process if the last detected ratio (R) is less than 0.5. If the ratio of last detected operation time (t_{h,}) of the heater (5) to the previous operation time (tₕ₋₁) is smaller than 0.5., then the heater (5) is not required to operate any longer. The present temperature of the thawing compartment (4) interior is sufficient for completing thawing of the frozen object. Thus, unnecessary energy consumption is prevented.

In an embodiment of the first alternative, the control unit (6) ends the thawing process if the last detected ratio (R) is equal to 0.5. In the case the value derived from the ratio (R) of the last detected operation time (t_{h,}) of the heater (5) to the previous operation time (tₕ₋₁) is equal to 0.5, then the heater (5) is not required to operate any longer. The present temperature of the thawing compartment (4) interior is sufficient for completing thawing of the frozen object. Thus, unnecessary energy consumption is prevented.

In a first alternative of the present invention, the control unit (6) compares the difference (D=tₕ- tₕ₋₁) between the last detected operation time (tₕ) and the previous operation operation time (tₕ₋₁) with a value (Dₗᵢₘᵢₜ) recorded in its memory, predetermined by the producer and ends the thawing process if the last detected difference (D) is greater than the limit value (Dₗᵢₘᵢₜ). Consequently, the thawing - process is ended in case the difference (D) between the last detected operation time (tₕ), and the previous operation time (tₕ₋₁) exceeds a determined value (Dₗᵢₘᵢₜ) and thus unnecessary energy consumption is prevented. Furthermore, the thawed object is prevented from being overheated after being thawed (Figure 4).

In an embodiment of the present invention, the refrigerator (1) comprises a button (10) that provides the thawing process to be started or ended by being actuated by the user. Thus, the thawing compartment (4) is provided to be used under the control of the user.

In an embodiment of the present invention, the refrigerator (1) comprises at least one alerter (9) that enables the user to be informed when the thawing process is started or ended. The user is informed by an audible or visual signal given by means of the alerter (9) when the thawing process is started or ended.

By means of the present invention, a refrigerator (1) is realized, having a thawing compartment (4) that ends the thawing process automatically according to the thawing time. Consequently, the thawing process is ended by the thawing compartment (4) automatically without requiring the intervention of the user. Furthermore, the thawed object is prevented from being overheated after being thawed.

It is to be understood that the present invention is not limited to the embodiments disclosed above and a person skilled in the art can easily introduce different embodiments. These different embodiments should also be considered within the scope of the claims of the present invention.

## Claims

1. A refrigerator (1) comprising a fresh food compartment (2) wherein objects to be cooled are placed, a freezing compartment (3) wherein objects to be frozen are placed and a thawing compartment (4) disposed inside the fresh food compartment (2), wherein the frozen objects are placed, a heater (5) providing the interior of the thawing compartment (4) to be heated, a sensor (8) that detects the temperature inside the thawing compartment (4) and a control unit (6) that detects the operation time (tₕ) elapsing for reaching the upper limit temperature value (Tᵤₚₚₑᵣ) predetermined by the producer and recorded in its memory and that operates the heater (5) by applying consecutive operation times (tₕ) and stopping times (t_{off}),
**characterized by** the control unit (6) that
- compares the last detected operation time (tₕ) with the previous operation time (tₕ₋₁) and continues the thawing process or stops the thawing process by either
a) comparing the ratio (R= tₕ/tₕ₋₁) of the last detected operation time (tₕ), to the previous operation time (tₙ₋₁) with a limit ratio (Rₗᵢₘᵢₜ) recorded in its memory, predetermined by the producer and ending the thawing process if the last detected ratio (R) is smaller than the limit ratio (Rₗᵢₘᵢₜ) value, or
b) comparing the difference (D=tₕ-tₕ₋₁) between the last detected operation time (tₕ) and the previous operation time (tₕ₋₁) with a limit value (Dₗᵢₘᵢₜ) recorded in its memory, predetermined by the producer and ending the thawing process if the last detected difference (D) is greater than the limit value (Dₗᵢₘᵢₜ).

2. The refrigerator (1) as in Claim 1, **characterized by** the thawing compartment (4) having at least one fan (7) providing the air therein to be propelled and the control unit (6) providing the thawing process to be ended by stopping the fan (7) if the last detected ratio (R) is smaller than the limit ratio (Rₗᵢₘᵢₜ) value.

3. The refrigerator (1) as in Claim 1 or 2, **characterized by** the control unit (6) that ends the thawing process if the last detected ratio (R) is smaller than 0.5.

4. The refrigerator (1) as in Claim 1 or 2, **characterized by** the control unit (6) that ends the thawing process if the last detected ratio (R) is equal to 0.5.

5. The refrigerator (1) as in anyone of the above Claims, **characterized by** at least one button (10) that provides the thawing process to be started or ended by being actuated by the user.

6. The refrigerator (1) as in anyone of the above Claims, **characterized by** at least one alerter (9) that enables the user to be informed when the thawing process is started or ended.

## Patentansprüche

1. Kühlschrank (1), umfassend ein Frischhaltefach (2), in das zu kühlende Artikel gegeben werden, ein Gefrierfach (3), in das einzufrierende Artikel gegeben werden, und ein Auftaufach (4), das im Frischhaltefach (2) angeordnet ist und in das gefrorene Artikel gegeben werden, eine Heizeinrichtung (5), die dafür sorgt, dass das Innere des Auftaufachs (4) erwärmt wird, einen Sensor (8), der die Temperatur im Auftaufach (4) erkennt, und eine Steuereinheit (6), die die Betriebszeit (tₕ) erkennt, die bis zum Erreichen des oberen Temperaturgrenzwerts (Tᵤₚₚₑᵣ) vergeht, der vom Hersteller vorgegeben und in ihrem Speicher aufgezeichnet ist, und die die Heizeinrichtung (5) betreibt, indem sie aufeinanderfolgende Betriebszeiten (tₕ) und Stillstandszeiten (t_{off}) anwendet,
**dadurch gekennzeichnet, dass** die Steuereinheit (6)
- die zuletzt erkannte Betriebszeit (tₕ) mit der vorherigen Betriebszeit (tₕ₋₁) vergleicht und den Auftauvorgang fortsetzt oder den Auftauvorgang anhält durch eins von
a) Vergleichen des Verhältnisses (R= tₕ/tₕ₋₁) der zuletzt erkannten Betriebszeit (tₕ) zur vorherigen Betriebszeit (tₕ₋₁) mit einem Verhältnisgrenzwert (Rₗᵢₘᵢₜ), der in ihrem Speicher aufgezeichnet und vom Hersteller vorgegeben ist, und Beenden des Auftauvorgangs, wenn das zuletzt erkannte Verhältnis (R) kleiner als der Verhältnisgrenzwert (Rₗᵢₘᵢₜ) ist, oder
b) Vergleichen der Differenz (D=tₕ-tₕ₋₁) zwischen der zuletzt erkannten Betriebszeit (tₕ) und der vorherigen Betriebszeit (tₕ₋₁) mit einem Grenzwert (Dₗᵢₘᵢₜ), der in ihrem Speicher aufgezeichnet und vom Hersteller vorgegeben ist, und Beenden des Auftauvorgangs, wenn die zuletzt erkannte Differenz (D) größer als der Grenzwert (Dₗᵢₘᵢₜ) ist.

2. Kühlschrank (1) nach Anspruch 1, **dadurch gekennzeichnet, dass** das Auftaufach (4) wenigstens ein Gebläse (7) aufweist, das dafür sorgt, dass die Luft darin umgewälzt wird, und dass die Steuereinheit (6) dafür sorgt, dass der Auftauvorgang beendet wird, indem sie das Gebläse (7) anhält, wenn das zuletzt erkannte Verhältnis (R) kleiner als der Verhältnisgrenzwert (Rₗᵢₘᵢₜ) ist.

3. Kühlschrank (1) nach Anspruch 1 oder 2, **dadurch gekennzeichnet, dass** die Steuereinheit (6) den Auftauvorgang beendet, wenn das zuletzt erkannte Verhältnis (R) kleiner als 0,5 ist.

4. Kühlschrank (1) nach Anspruch 1 oder 2, **dadurch gekennzeichnet, dass** die Steuereinheit (6) den Auftauvorgang beendet, wenn das zuletzt erkannte Verhältnis (R) gleich 0,5 ist.

5. Kühlschrank (1) nach einem der vorangehenden Ansprüche, **gekennzeichnet durch** wenigstens eine Taste (10), die bei Betätigung **durch** den Benutzer dafür sorgt, dass der Auftauvorgang gestartet oder beendet wird.

6. Kühlschrank (1) nach einem der vorangehenden Ansprüche, **gekennzeichnet durch** wenigstens eine Mitteilungseinrichtung (9), mit der der Benutzer informiert werden kann, wenn der Auftauvorgang gestartet oder beendet wird.

## Revendications

1. Un réfrigérateur (1) comprenant un compartiment d'aliments frais (2) où les objets à refroidir sont placés, un compartiment de congélation (3) où les objets à congeler sont placés et un compartiment de décongélation (4) qui est disposé dans le compartiment d'aliments frais (2), où les objets congelés sont placés, un dispositif de chauffage (5) qui permet le chauffage de l'intérieur du compartiment de décongélation (4), un capteur (8) qui détecte la température dans le compartiment de décongélation (4) et une unité de commande (6) qui détecte le temps de fonctionnement (tₕ) passant pour atteindre la valeur de température limite supérieure (Tᵤₚₚₑᵣ) prédéterminée par le fabricant et enregistrée dans sa mémoire et qui actionne le dispositif de chauffage (5) en appliquant des temps de fonctionnement consécutifs (tₕ) et des temps d'arrêt (t_{off}),
**caractérisé par** l'unité de commande (6) qui
- compare le dernier temps de fonctionnement détecté (tₕ) avec le temps de fonctionnement précédent (tₕ₋₁) et continue le processus de décongélation ou arrête le processus de décongélation en
a) comparant le rapport (R= tₕ/tₕ₋₁) du dernier temps de fonctionnement détecté (tₕ) au temps de fonctionnement précédent (tₕ₋₁) avec un rapport limite (Rₗᵢₘᵢₜ) enregistré dans sa mémoire, prédéterminé par le fabricant et mettant fin au processus de décongélation si le dernier rapport détecté (R) est inférieur à la valeur du rapport limite (Rₗᵢₘᵢₜ) ou
b) comparant la différence (D=tₕ-tₕ₋₁) entre le dernier temps de fonctionnement détecté (tₕ) et le temps de fonctionnement précédent (tₕ₋₁) avec une valeur limite (Dₗᵢₘᵢₜ) enregistrée dans sa mémoire, prédéterminée par le fabricant et mettant fin au processus de décongélation si la dernière différence détectée (D) est supérieure à la valeur de la différence limite (Dₗᵢₘᵢₜ).

2. Un réfrigérateur (1) selon la Revendication 1, **caractérisé par** le compartiment de décongélation (4) présentant au moins un ventilateur (7) qui permet à l'air là-dedans d'être propulsé et l'unité de commande (6) qui permet la terminaison du processus de décongélation en arrêtant le ventilateur (7) si le dernier rapport détecté (R) est inférieur à la valeur du rapport limite (Dₗᵢₘᵢₜ).

3. Un réfrigérateur (1) selon la Revendication 1 ou 2, **caractérisé par** l'unité de commande (6) qui termine le processus de décongélation si le dernier rapport détecté (R) est inférieur à 0,5.

4. Un réfrigérateur (1) selon la Revendication 1 ou 2, **caractérisé par** l'unité de commande (6) qui termine le processus de décongélation si le dernier rapport détecté (R) est égal à 0,5.

5. Un réfrigérateur (1) selon l'une quelconque des revendications précédentes, **caractérisé par** au moins un bouton (10) qui permet le commencement ou la terminaison du processus de décongélation en étant poussé par l'utilisateur.

6. Un réfrigérateur (1) selon l'une quelconque des revendications précédentes, **caractérisé par** au moins un moyen d'avertissement (9) qui permet à l'utilisateur d'être informé lorsque le processus de décongélation commence ou se termine.
